# EUROPEAN PATENT SPECIFICATION

(11) **EP 3 358 782 B1**
(45) Date of publication and mention of the grant of the patent: **22.12.2021**
(21) Application number: 16850587.3
(22) Date of filing: 08.09.2016
(51) Int. Cl.: H04L 9/16, G06F 21/44, H04L 9/08, H04L 9/32, H04W 12/04, H04W 84/20

(54) **COMMUNICATION DEVICE, MULTIHOP COMMUNICATION SYSTEM, AND COMMUNICATION METHOD**
KOMMUNIKATIONSVORRICHTUNG, MULTIHOP-KOMMUNIKATIONSSYSTEM UND KOMMUNIKATIONSVERFAHREN
DISPOSITIF DE COMMUNICATION, SYSTÈME DE COMMUNICATION MULTISAUTS, ET PROCÉDÉ DE COMMUNICATION

(30) Priority: 30.09.2015 JP 2015195260
(43) Date of publication of application: 08.08.2018
(73) Proprietor: Panasonic Intellectual Property Management Co., Ltd., Osaka-shi, Osaka 540-6207 (JP)
(72) Inventor: KURANO, Takashi, Osaka-shi, Osaka 540-6207 (JP); TARU, Kosuke, Osaka-shi, Osaka 540-6207 (JP)
(74) Representative: Appelt, Christian W.
(86) International application number: PCT/JP2016/004092
(87) International publication number: WO 2017/056406

(56) References cited:
- EP-A1- 2 760 232
- WO-A1-2011/045859
- JP-A- 2005 341 528
- JP-A- 2007 134 996
- JP-A- 2011 066 683
- JP-A- 2011 160 210
- US-A1- 2006 200 678
- US-A1- 2008 232 383

## Description

### TECHNICAL FIELD

The present invention relates to a multihop communication system, and a communication device and a communication method that are used in the multihop communication system.

### BACKGROUND ART

Conventionally, a multihop communication system in which a slave communicates with a master via another slave that serves as a relay station has been known. Patent Literature (PTL) 1 discloses a method for creating an encryption key for a multihop communication network.

### Citation List

### Patent Literature

PTL 1: Japanese Unexamined Patent Application Publication No. 2007-174083

EP 2 760 232 A1 discloses a configuration method for a network system including a master device and a slave device. The configuration method includes broadcasting a notify configured count packet via the master device, receiving the notify configured count packet via the slave device to check whether the notify configured count packet equals a predetermined notify configured count packet, generating a request configured content packet via the slave device if the notify configured count packet does not equal the predetermined notify configured count packet, receiving and decrypting the request configured content packet via the master device to correspondingly generate a response configured content packet, and receiving and decrypting the response configured content packet via the slave device to share a network utilized by the master device.

### SUMMARY OF THE INVENTION

### TECHNICAL PROBLEM

In a multihop communication system, a slave that communicates with a master via another slave that serves as a relay station (a slave that cannot directly communicate with a master) cannot be directly informed of the operating state of the master. For example, in a system in which an encryption key is updated each time a master is activated, a slave may attempt to communicate with the master using a pre-update encryption key, although the encryption key has been updated due to an activation of a master.

The present invention provides a multihop communication system in which a slave can be readily informed of the operating state of a master, and a communication device and a communication method that are used in the multihop communication system.

### SOLUTIONS TO PROBLEM

The present invention is defined by the appended claims.

A communication device according to an aspect of the present invention is a communication device that is configured to operate as a master and is to be included in a multihop communication system, the communication device comprising:
a communicator that is configured to transmit a hello packet to at least one slave included in the multihop communication system; and
a controller that is configured to cause the communicator to transmit activation count information that indicates a cumulative activation count of the communication device, the activation count information being included in the hello packet, wherein the hello packet is a packet for notifying the at least one slave that the communication device is communicable;
wherein
the activation count information indicates a cumulative value of a number of times the communication device in a state of deactivation has reactivated; and
wherein the communication device further comprises
a storage that is configured to store an encryption key that is used for communicating with the at least one slave, wherein
the controller is configured to change the encryption key stored in the storage when the communication device is activated.

A communication device according to another aspect of the present invention is a communication device that is configured to operate as a slave and is to be included in a multihop communication system, the communication device comprising:
a communicator that is configured to receive a hello packet that includes activation count information indicating a cumulative activation count of a master included in the multihop communication system, wherein the hello packet is a packet for notifying the slave that the master is communicable;
a storage; and
a controller that is configured to store the activation count information included in the received hello packet into the storage, and to perform information processing using the activation count information stored,
wherein
the activation count information indicates a cumulative value of a number of times the master in a state of deactivation has reactivated; and
   in that the storage is further configured to store an encryption key received by the communicator from the master,
when the communicator receives a hello packet, the controller (22) is further configured to determine whether first activation count information included in the received hello packet matches second activation count information stored in the storage, and
the controller is further configured to communicate with the master using the encryption key stored in the storage when the controller determines that the first activation count information matches the second activation count information.

A communication method according to an aspect of the present invention is a communication method performed by a multihop communication system that includes a master and a slave, the communication method including: transmitting, by the master, activation count information that indicates a cumulative activation count of the master, the activation count information being included in a hello packet; receiving, by the slave, the hello packet that includes the activation count information; and storing, by the slave, the activation count information included in the received hello packet into a storage included in the slave, wherein the activation count information indicates a cumulative value of a number of times the master in a state of deactivation has reactivated; storing, by the master an encryption key that is used for communicating with the slave, wherein the master is configured to change the encryption key stored in the storage when the master activated; storing, by the slave, the encryption key received from the master; determining, by the slave, whether first activation count information included in the received hello packet matches stored second activation count information; and communicating, by the slave, with the master using the encryption key when determined that the first activation count information matches the second activation count information.

A program according to an aspect of the present invention is a program for causing a computer to perform the communication method.

### ADVANTAGEOUS EFFECT OF INVENTION

According to a multihop communication system according to the present invention, and a communication device according to the present invention and a communication method according to the present invention that are used in the multihop communication system, a slave can be readily informed of the operating state of a master.

### BRIEF DESCRIPTION OF DRAWINGS

FIG. 1 is a block diagram showing a functional configuration of a multihop communication system according to an embodiment;
FIG. 2 is a diagram showing an example of a format of a sub-message;
FIG. 3 is a diagram showing an example of a format of attribute information;
FIG. 4 shows an example of attribute information used as activation count information;
FIG. 5 is a sequence diagram showing Operation Example 1 of the multihop communication system according to the embodiment;
FIG. 6 is a flowchart of activation count determination processing;
FIG. 7 is a flowchart of activation count determination processing according to a variation;
FIG. 8 is a sequence diagram showing Operation Example 2 of the multihop communication system according to the embodiment; and
FIG. 9 is a sequence diagram showing Operation Example 3 of the multihop communication system according to the embodiment.

### DESCRIPTION OF EXEMPLARY EMBODIMENT

The following describes embodiments with reference to the drawings. Note that the embodiments described below each shows a general or specific example. The numerical values, shapes, materials, elements, the arrangement and connection of the elements, steps, and the order of the steps, for instance, described in the following embodiments are examples, and thus are not intended to limit the present invention. Therefore, among the elements in the following embodiments, elements not recited in any of the independent claims defining the most generic part of the present inventions are described as arbitrary elements.

Note that the drawings are schematic diagrams, and do not necessarily provide strictly accurate illustration. Throughout the drawings, the same numeral is given to substantially the same element, and redundant description is omitted or simplified.

### EMBODIMENT

### [Configuration]

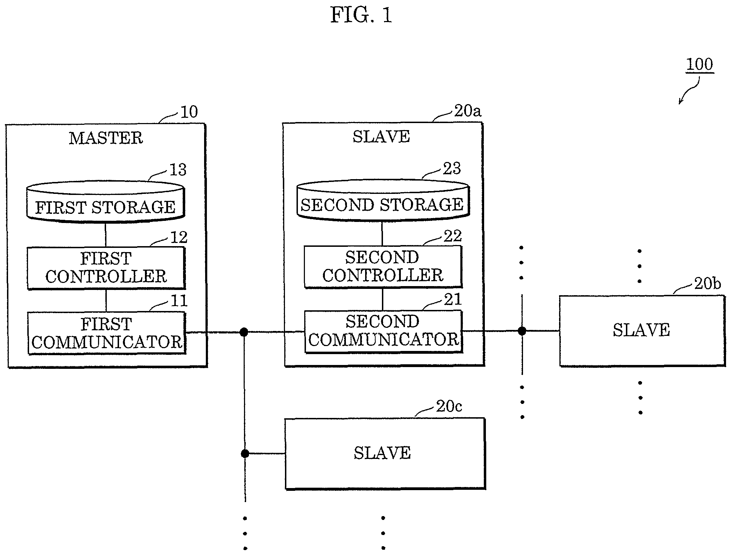

Firstly, the functional configuration of a multihop communication system according to an embodiment is to be described. FIG. 1 is a block diagram showing the functional configuration of the multihop communication system. Note that although slave 20a, among a plurality of slaves, is the only slave illustrated in detail in FIG. 1 and mainly described in the following embodiment, other slaves included in multihop communication system 100 (such as slaves 20b and 20c, for example) have the same functional configuration as that of slave 20a.

As shown in FIG. 1, multihop communication system 100 includes master 10 and a plurality of slaves that includes slaves 20a, 20b, and 20c. The number of slaves included in multihop communication system 100 is not particularly limited. A master-slave type communication network having, for example, a tree topology is used in multihop communication system 100.

In the master-slave type communication network, typically, master 10 manages routes (route information) to slaves, and each of the slaves manages at least a route to the master node. In the master-slave type communication network, typically, master 10 is at one end of a route for transmitting data and one of the slaves is at the other end for transmitting data.

Firstly, the configuration of master 10 is to be described. Master 10 is an example of a communication device which operates as a master in multihop communication system 100, and includes first communicator 11, first controller 12, and first storage 13. Master 10 obtains (collects) and manages data from a plurality of slaves in multihop communication system 100, for example.

First communicator 11 is a communication interface for communicating with second communicator 21 included in a slave (such as slave 20a). First communicator 11 is specifically a communication module (communication circuit).

First communicator 11 transmits a hello packet to at least one of the slaves (such as slave 20a) included in multihop communication system 100 based on, for example, the control of first controller 12.

A hello packet is a packet (signal) broadcasted in every predetermined period to notify other communication devices that a communication device that has transmitted the hello packet can communicate with the other communication devices (communication device is alive). A predetermined period is 10 s (seconds), for example. Note that a first hello packet is transmitted, for example, 100 ms after master 10 is activated.

A hello packet is broadcasted not only by a communication device that operates as master 10 but also by a communication device that operates as a slave. A hello packet includes an identifier of a transmitter communication device, route information indicating a route from a communication device that operates as master 10 to a transmitter communication device (the number of hops and an identifier of a communication device through which the route passes), and others, and is used for building and changing a communication route.

Note that in the following description of the embodiment, an identifier of a communication device is used as an identifier (ID) and an address for communication of the communication device, however, the ID and the address of a communication device may be provided separately. The identifier of a communication device is, for example, a media access control (MAC) address.

The communication performed between first communicator 11 and second communicator 21 may be wired or wireless in any manner, and thus is not particularly limited. For example, first communicator 11 and second communicator 21 communicate with each other by power line communication (PLC), and may communicate with each other in a wired manner using a wired local area network (LAN). Further, first communicator 11 and second communicator 21 may wirelessly communicate with each other according to telecommunications standards such as a specific low-power radio, ZigBee (registered trademark), Bluetooth (registered trademark), Wi-Fi (registered trademark), and others.

First controller 12 is a control device that controls first communicator 11, and receives data from, for example, slave 20a via first communicator 11. Further, first controller 12 causes first communicator 11 to transmit a hello packet that includes activation count information, which is to be described later, and an encryption key, which is to be described later, and others. Although first controller 12 is, specifically, a processor that runs a control program stored in first storage 13, first controller 12 may be realized by a microcomputer or a dedicated circuit, for instance.

First storage 13 is a storage device that stores a control program run by first controller 12, and route information indicating routes from master 10 to a plurality of slaves included in multihop communication system 100. In the present embodiment, first storage 13 also stores activation count information and an encryption key. First storage 13 is realized by, for example, a semiconductor memory.

The aforementioned activation count information indicates a cumulative count of activation of master 10. Specifically, the activation count information indicates, for example, a value (a count value) incremented by 1 each time master 10 is activated, but may indicate a value decremented by 1 each time master 10 is activated. Note that the activation count information may be any information so long as the information indicates a cumulative count of activation of master 10.

The aforementioned encryption key is used for communication with each of the slaves. Specifically the encryption key is used for encrypting data in communication with the slaves. Note that, in the present embodiment, one encryption key is created for the plurality of slaves, and is changed (updated) each time master 10 is activated. Nevertheless, encryption keys may be created one for each of the slaves. In this case, an identifier of a slave and an encryption key of the slave are stored in first storage 13 in association with each other.

Next, slave 20a is to be described. Slave 20a is an example of a communication device which operates as a slave in multihop communication system 100, and includes second communicator 21, second controller 22, and second storage 23.

Second communicator 21 is a communication interface for communicating with first communicator 11 and second communicator 21 included in another slave. Specifically, second communicator 21 is the same type of a communication module (communication circuit) as first communicator 11. Second communicator 21 transmits a hello packet based on the control of second controller 22, for example. Further, second communicator 21 receives, from master 10 or another slave, a hello packet that includes activation count information indicating a cumulative count of activation of a master included in a multihop communication system.

Second controller 22 is a control device that controls second communicator 21, and causes second communicator 21 to transmit, for example, data, a hello packet, and others. Although second controller 22 is, specifically, a processor that runs a control program stored in second storage 23, second controller 22 may be realized by a microcomputer or a dedicated circuit, for instance.

Second storage 23 is a storage device that stores a control program run by second controller 22, an adjacent node table, an encryption key and activation count information that are received by second communicator 21, and others. Specifically, second storage 23 is realized by, for example, a semiconductor memory or the like.

In multihop communication system 100 described above, first controller 12 of master 10 causes first communicator 11 to transmit activation count information indicating a cumulative count of activation of master 10, the activation count information being included in a hello packet.

In this manner, slave 20a that has received such a hello packet can be informed of a cumulative count of activation of master 10. Thus, slave 20a can be readily informed of the operating state of master 10.

Further, second controller 22 of slave 20a stores activation count information included in a hello packet received by second communicator 21 into second storage 23.

In this manner, second controller 22 can determine whether master 10 is reactivated by comparing first activation count information included in a hello packet received after the activation count information is stored with second activation count information stored in second storage 23.

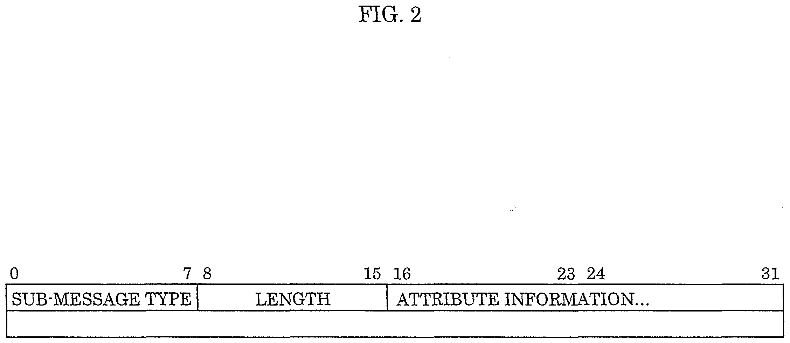

Note that, a cumulative count of activation may be newly specified as, for example, a sub-message of master information that is a sub-message to notify information regarding master 10 (master). In this case, a sub-message can be provided with expandability if the type-length-value (TLV) format is used for attribute information of the sub-message. FIG. 2 is a diagram showing an example of a sub-message format.

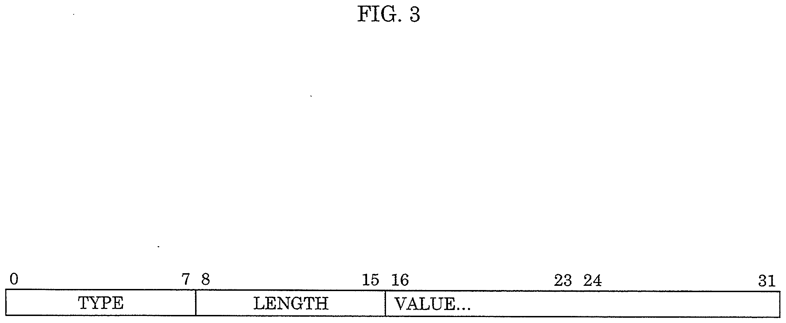

As shown in FIG. 2, a sub-message type is stored in a field one byte from the head of a sub-message. For example, "10" is stored as a type corresponding to the sub-message of master information. In the next one-byte field, the length of the sub-message (the length from the sub-message type to sub-message attribute information) is stored. Various attribute information is to be stored following the length of the sub-message. Attribute information is variable in length. FIG. 3 is a diagram showing an example of a format of attribute information.

As shown in FIG. 3, an attribute information type is stored in a field one byte from the head of attribute information. In the next one-byte field, the length of the attribute information (the length from the attribute information type to an attribute information value) is stored. A value is to be stored following the length of attribute information. The value is variable in length.

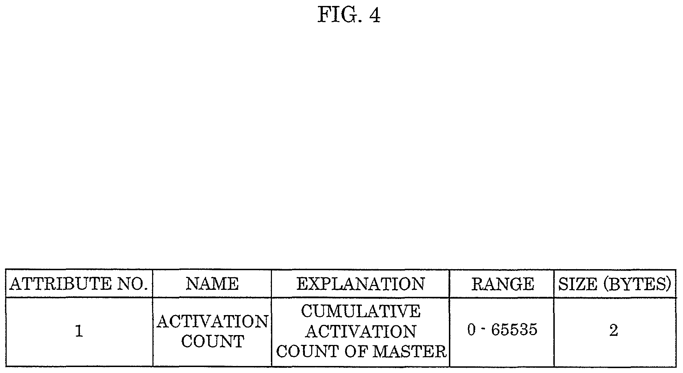

As such attribute information, activation count information may be specified as shown in FIG. 4, for example. FIG. 4 shows an example of attribute information used as activation count information. As shown in FIG. 4, activation count information may be specified as, for example, attribute information indicating a type "1" and a value in 2-byte length (from 0 to 65535). The value indicates a cumulative count of activation and returns to 0 when a cumulative count of activation exceeds 65535.

### [Operation Example 1]

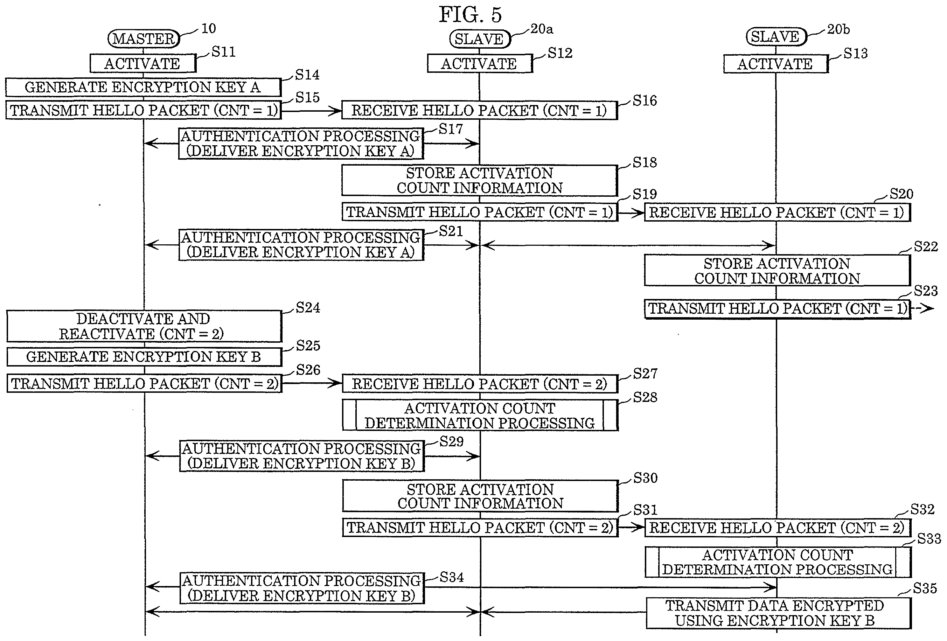

Next, Operation Example 1 of multihop communication system 100 is to be described. FIG. 5 is a sequence diagram showing Operation Example 1 of multihop communication system 100. Note that in Operation Example 1, slave 20a is a slave capable of communicating directly with master 10 and slave 20b is a slave capable of communicating with master 10 by the relay of slave 20a.

First, master 10, slave 20a, and slave 20b are each activated (S11- S13). Here, first controller 12 of master 10 increments activation count information from 0 to 1, and stores the information into first storage 13. In the following, activation count information will be also denoted as "cnt," and cnt = 1 in step S11.

Further, first controller 12 of master 10 generates encryption key A (S14), and stores the key into first storage 13. Encryption key A is used for communication between master 10 and a plurality of slaves.

Next, first controller 12 causes first communicator 11 to broadcast a hello packet that includes the activation count information (cnt = 1) (S15). The hello packet includes the identifier of master 10 as information indicating a transmitter. Second communicator 21 of slave 20a receives the hello packet that includes the activation count information (cnt = 1) (S16).

Next, second controller 22 of slave 20a performs authentication processing to acquire encryption key A (S17). In the authentication processing, firstly, second communicator 21 of slave 20a transmits an authentication request that includes the identifier of slave 20a as authentication information to first communicator 11. When first communicator 11 receives the authentication request from slave 20a, first controller 12 stores the authentication information of slave 20a into first storage 13. Then, first controller 12 reads encryption key A from first storage 13, and causes first communicator 11 to transmit encryption key A read, designating the identifier (address) of slave 20a. In other words, master 10 delivers encryption key A to slave 20a.

Next, second controller 22 of slave 20a stores the activation count information (cnt = 1) included in the hello packet received by second communicator 21 in step S16 into second storage 23 (S18). Further, second controller 22 of slave 20a generates a hello packet that includes the activation count information (cnt =1) included in the hello packet received in step S16 and the identifier of slave 20a (the address of a transmitter), and causes second communicator 21 to broadcast the generated hello packet (S19). Second communicator 21 of slave 20b receives the hello packet that includes the activation count information (cnt = 1) (S20).

Next, second controller 22 of slave 20b performs authentication processing to acquire encryption key A, from master 10, that is used for communicating with master 10 (S21). In the authentication processing, firstly, second communicator 21 of slave 20b transmits an authentication request that includes the identifier of slave 20b as authentication information to second communicator 21 of slave 20a. Slave 20a (second communicator 21) relays the authentication request so that the authentication request is transmitted to first communicator 11.

When first communicator 11 receives the authentication request from slave 20b, first controller 12 stores the authentication information of slave 20b into first storage 13. Then, first controller 12 reads encryption key A from first storage 13, and causes first communicator 11 to transmit encryption key A read, designating the identifier (address) of slave 20b. Slave 20a relays encryption key A so that encryption key A is delivered to slave 20b. In other words, master 10 delivers encryption key A to slave 20b.

Note that encryption key A may be used as a public key, for example. In other words, first controller 12 may encrypts encryption key A by a secret key, and cause first communicator 11 to transmit encrypted encryption key A. In this case, the secret key is to be stored in advance into first storage 13 and into second storage 23 of each of the slaves.

Second controller 22 of slave 20b stores the activation count information (cnt = 1) that is included in the hello packet received by second communicator 21 in step S20 into second storage 23 (S22). Further, second controller 22 of slave 20b generates a hello packet that includes the activation count information (cnt = 1) included in the hello packet received in step S20 and the identifier of slave 20b (the address of a transmitter), and causes second communicator 21 to broadcast the generated hello packet (S23).

After that, master 10 deactivates and then reactivates (S24). Master 10 may deactivate and reactivate artificially by a user or may deactivate and reactivate automatically when the communication state of master 10 in the network is poor, for example.

In this case, first controller 12 of master 10 increments the activation count information from 1 to 2 and stores the information into first storage 13. Further, first controller 12 of master 10 generates encryption key B that is different from encryption key A, being triggered by reactivation (S25), and stores generated encryption key B into first storage 13. Encryption key A is to be deleted. As described above, first controller 12 changes the encryption key stored in first storage 13 each time master 10 is activated.

Further, first controller 12 deletes the authentication information that has been stored in first storage 13 (the authentication information stored in first storage 13 at the time of the authentication processing for delivering encryption key A). As such, the safety can be improved by deleting old authentication information.

Next, first controller 12 causes first communicator 11 to broadcast a hello packet that includes activation count information (cnt = 2) (S26). The hello packet includes the identifier of master 10 as the address of the transmitter. Second communicator 21 of slave 20a receives the hello packet that includes activation count information (cnt = 2) (S27).

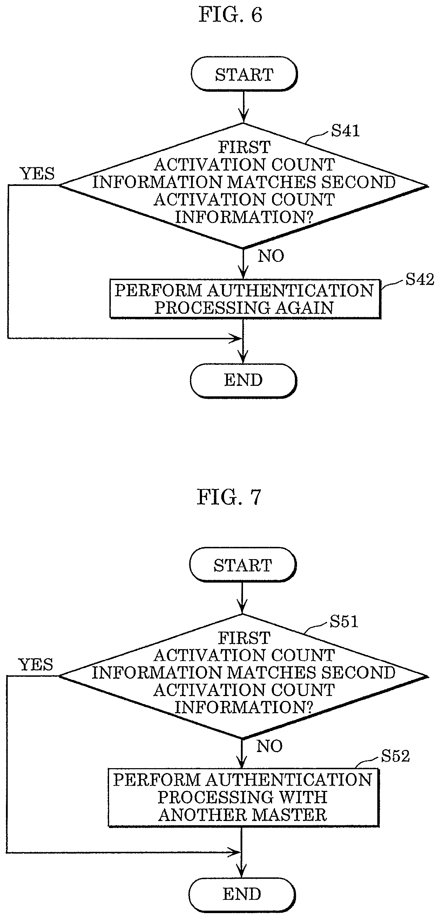

When second communicator 21 of slave 20a receives the hello packet that includes the activation count information (cnt = 2), second controller 22 of slave 20a performs an activation count determination processing (S28). FIG. 6 is a flowchart of an activation count determination processing.

In the activation count determination processing, second controller 22 of slave 20a determines whether the first activation count information included in the received hello packet matches the second activation count information stored in second storage 23 (S41). Note that the match here means the cumulative count of activation indicated by the first activation count information and the cumulative activation count indicated by the second activation count substantially match. In this case, the first activation count information refers to the activation count information included in the hello packet received in step S27 and the second activation count information refers to the activation count information stored in second storage 23 in step S18.

Here, the first activation count information indicates cnt = 1 and does not match the second activation count information that indicates cnt = 2. Accordingly, the first activation count information is determined to be different from the second activation count information (NO in S41), and second controller 22 of slave 20a performs again the authentication processing (S42). In this manner, as shown in FIG. 5, encryption key B is delivered to slave 20a (S29).

Note that, in FIG. 6, if the first activation count information is determined to match the second activation count information (YES in S41), an encryption key of master 10 is unlikely to be changed. Thus, slave 20a communicates with master 10 using encryption key A stored in second storage 23.

After that, second controller 22 of slave 20a stores the activation count information (cnt = 2) included in the hello packet received by second communicator 21 in step S27 into second storage 23 (S30). Further, second controller 22 of slave 20a generates a hello packet that includes the activation count information (cnt = 2) included in the hello packet received in step S27 and the identifier of slave 20a (the address of a transmitter), and causes second communicator 21 to broadcast the generated hello packet (S31). Second communicator 21 of slave 20b receives the hello packet that includes the activation count information (cnt = 2) (S30).

When second communicator 21 of slave 20b receives the hello packet that includes activation count information (cnt = 2), second controller 22 of slave 20b performs activation count determination processing (S33). The activation count determination processing is the same processing described with reference to FIG. 6. Here, the first activation count information is determined to be different from the second activation count information, and second controller 22 of slave 20b performs again the authentication processing, thus encryption key B is delivered to slave 20b (S34). In this manner, slave 20b can transmit data encrypted using encryption key B to master 10 via slave 20a as a relay station (S35).

As described above, slave 20a can detect the reactivation of master 10 by master 10 transmitting activation count information of master 10 being included in a hello packet. Further, slave 20b can also detect the reactivation of master 10 by slave 20a transmitting a hello packet that includes the activation count information of master 10. Thus, a plurality of slaves included in multihop communication system 100 can detect the reactivation of master 10 at least for each period (for example, 10 seconds) in which a hello packet is transmitted. In other words, in multihop communication system 100, slaves 20a and 20b are readily informed of the operating state of master 10.

### [Variation of Operation Example 1]

Note that in Operation Example 1 above, when the first activation count information and the second activation count are determined to be different, authentication processing is performed again with same master 10, but when multihop communication system 100 includes a plurality of masters, authentication processing may be performed with another master. FIG. 7 is a flowchart of activation count determination processing as mentioned above. Note that the following describes a case that slave 20a that has already performed authentication processing with master 10 performs activation count determination processing using the activation count information of master 10. Second storage 23 of slave 20a stores route information indicating a route to a master different from master 10.

In activation count determination processing shown in FIG. 7, second controller 22 of slave 20a determines whether first activation count information included in a received hello packet matches second activation count information stored in second storage 23 (S51).

When the first activation count information is determined to match the second activation count information (YES in S51), slave 20a communicates with master 10 using an encryption key already stored in second storage 23.

On the other hand, when the first activation count information is determined to be different from the second activation count information (NO in S51), second controller 22 of slave 20a performs authentication processing with another master different from master 10 (S52). Specifically, second communicator 21 of slave 20a transmits an authentication request that includes the identifier of slave 20a as authentication information, designating the identifier of the other master as an address. In this manner, slave 20a can acquire, from the other master, an encryption key to be used for communicating with the other master.

Through the above activation count determination processing, slave 20a can join, based on activation count information, a network of another master where a communication state is estimated to be better, instead of the network of master 10 where a communication state is estimated to be poor due to reactivation.

### [Operation Example 2]

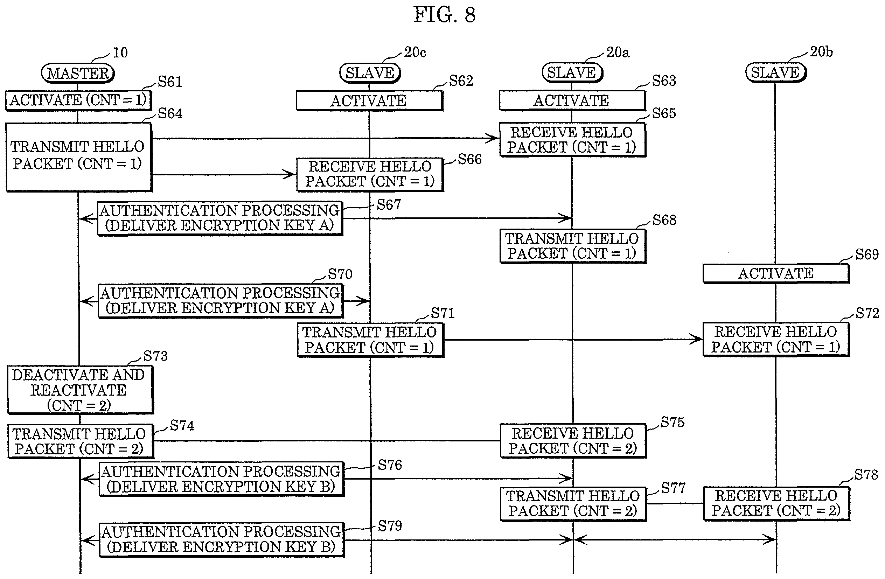

Slaves included in multihop communication system 100 may select another slave as a relaying station, based on activation count information. The following describes Operation Example 2 of such multihop communication system 100. FIG. 8 is a sequence diagram showing Operation Example 2 of multihop communications system 100.

Note that in following Operation Example 2, slaves 20a and 20c can communicate directly with master 10, and slave 20b can communicate with master 10 by the relay of either slave 20a or 20c, and is to join the network of master 10 at some later point. Further, in Operation Example 2, descriptions regarding detailed items described in Operation Example 1 may be omitted.

Firstly, master 10, slave 20a, and slave 20c are each activated (S61-S63). Here, first controller 12 of master 10 increments active count information from 0 to 1, and stores the information into first storage 13. Further, first controller 12 of master 10 generates encryption key A (S14), and stores generated encryption key A into first storage 13.

Next, first controller 12 causes first communicator 11 to broadcast a hello packet that includes activation count information (cnt = 1) (S64).

Second communicator 21 of slave 20a receives the hello packet that includes the activation count information (cnt = 1) (S65), and second controller 22 of slave 20a stores the activation count information (cnt = 1) included in the received hello packet into second storage 23 of slave 20a. Similarly, second communicator 21 of slave 20c receives a hello packet that includes the activation count information (cnt = 1) (S66), and second controller 22 of slave 20c stores the activation count information (cnt = 1) included in the received hello packet into second storage 23 of slave 20c.

Then, second controller 22 of slave 20a performs authentication processing to acquire encryption key A (S67), and causes second communicator 21 of slave 20a to broadcast a hello packet that includes the activation count information (cnt = 1) and the identifier of slave 20a (S68). Here, slave 20b is activated to join the network of master 10 (S69).

After that, second controller 22 of slave 20c performs authentication processing to acquire encryption key A (S70), and causes second communicator 21 of slave 20c to broadcast a hello packet that includes the activation count information (cnt = 1) and the identifier of slave 20c (S71). Second communicator 21 of slave 20b receives a hello packet transmitted by second communicator 21 of slave 20c (S72), and the activation count information (cnt = 1) and the identifier of slave 20c are stored into second storage 23 of slave 20b, in association with each other.

Note that a standby time is provided after the hello packet is received in step S72. For example, a period in which another slave may transmit a hello packet is considered to be a standby time, and authentication processing starts after the standby time has elapsed.

On the other hand, master 10 deactivates and reactivates (S73). Then, first controller 12 of slave 10 increments the activation count information from 1 to 2, and stores the activation count information into first storage 13. First controller 12 generates encryption key B, and stores generated encryption key B into first storage 13.

Next, first controller 12 causes first communicator 11 to broadcast a hello packet that includes the activation count information (cnt = 2) (S74).

Second communicator 21 of slave 20a receives the hello packet that includes the activation count information (cnt = 2) (S75). Second controller 22 of slave 20a performs authentication processing to acquire encryption key B (S76), and causes second communicator 21 of slave 20a to broadcast a hello packet that includes the activation count information (cnt = 2) and the identifier of slave 20a (S77). Second communicator 21 of slave 20b receives the hello packet transmitted by second communicator 21 of slave 20a (S78), and the activation count information (cnt = 2) and the identifier of slave 20a are stored into second storage 23 of slave 20b, in association with each other.

On the other hand, second communicator 21 of slave 20c does not receive the hello packet transmitted in step S74 due to a poor communication state, for instance.

In the example as described above, second controller 22 of slave 20b compares a plurality of activation count information included in a plurality of hello packets received. More specifically, second controller 22 of slave 20b compares a plurality of activation count information stored in second storage 23 of slave 20b in association with identifiers of transmitter slaves.

Then, second controller 22 of slave 20b selects, based on the result of the comparison, slave 20a that has transmitted the activation count information that indicates the highest activation count, as a relaying station for transmitting data to a master. For example, second communicator 21 of slave 20b performs authentication processing with master 10 by transmitting an authentication request to second communicator 21 of slave 20a (S79).

When attempting to connect with master 10 via slave 20c that has not detected the reactivation of master 10 (that has not received the incremented activation count information), data (an authentication request, for example) may not reach master 10. Such a failure can be prevented if slave 20b selects, as a relay station, slave 20a that has transmitted activation count information indicating the highest cumulative activation count.

### [Variation of Operation Example 2]

Note that there may be a case where second communicator 21 of slave 20b receives first activation count information that indicates a cumulative activation count lower than a cumulative activation count indicated by second activation count information which is stored in second storage 23. A slave that has transmitted a hello packet that includes such activation count information may not be communicating with master 10 so that if such a slave is selected as a relay station, data (an authentication request, for example) may not reach master 10.

Thus, when slave 20b determines that first activation count information indicates a cumulative activation count lower than a cumulative activation count indicated by second activation count information, may exclude a slave that has transmitted a hello packet that includes first activation count information from a candidate for a relay station when selecting a slave as a relay station for transmitting data to master 10. In this manner, a problem that data does not reach master 10 can be prevented.

Note that, as described with reference to FIG. 4, activation count information is 2-byte information, and thus is represented by a value in a range from 0 to 65535. Activation count information increments for each activation, and returns to 0 when the activation count information exceeds 65535. Thus, for example, a value 9999 before a present value may be invalidated in consideration of active count information being a cyclic value.

When Y > X, where Y denotes a cumulative activation count indicated by activation count information that has been already received and X denotes a cumulative activation count indicated by activation count information that has been newly received, if (Y - X) < 10000 is satisfied, the newly received activation count information is invalidated. Further, when Y < X, if (65535 - X) + Y + 1 < 10000 is satisfied, the newly received activation count information is invalidated.

### [Operation Example 3]

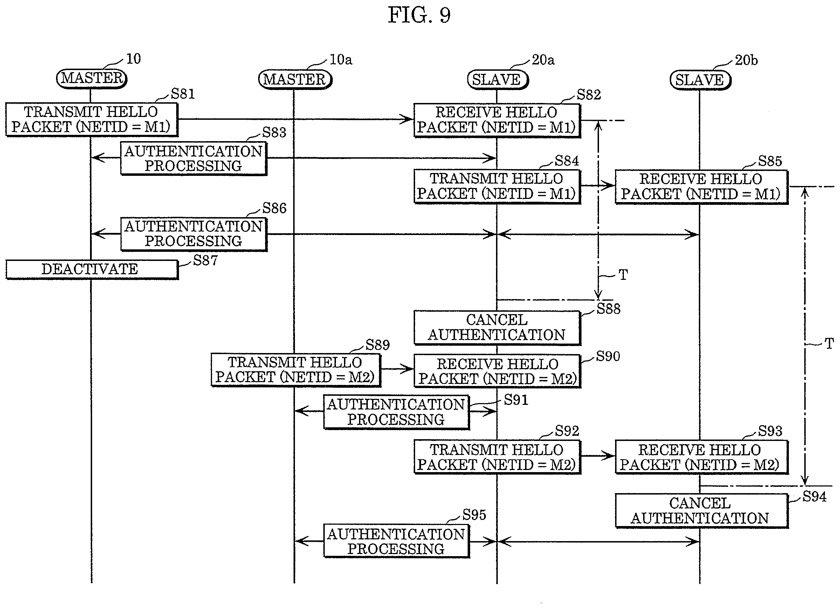

When multihop communication system 100 includes a plurality of masters, a slave that does not receive a hello packet that includes an identifier of a master for at least a predetermined period may perform authentication processing with another master. Hereinafter, an example of operation of such multihop communication system 100 is to be described. FIG. 9 is a sequence diagram showing Operation Example 3 of multihop communication system 100.

Note that in Operation Example 3 below, slave 20a can communicate directly with masters 10 and 10a, and slave 20b can communicate with masters 10 and 10a by the relay of slave 20a. Masters 10 and 10a and slaves 20a and 20b are already activated. Further, in Operation Example 3, descriptions of detailed items described in Operation Examples 1 and 2 may be omitted.

Firstly, first controller 12 of master 10 causes first communicator 11 of master 10 to broadcast a hello packet that includes the identifier of master 10 (NETID) (S81). In the following description, the identifier of a master is indicated as a NETID, and the NETID of master 10 is M1.

Second communicator 21 of slave 20a receives the hello packet that includes the identifier (NETID = M1) (S82), and second controller 22 of slave 20a stores the time when the hello packet is received into second storage 23 of slave 20a.

Next, second controller 22 of slave 20a performs authentication processing with master 10 (S83). Second controller 22 of slave 20a further generates a hello packet that includes the identifier (NETID = Ml), and causes second communicator 21 of slave 20a to broadcast the generated hello packet (S84). Second communicator 21 of slave 20b receives the hello packet that includes the identifier (NETID = M1) (S85), and second controller 22 of slave 20b stores the time when the hello packet is received into second storage 23 of slave 20b.

Next, second controller 22 of slave 20b performs authentication processing with master 10, via slave 20a as a relay station, to acquire, from master 10, an encryption key that is used for communicating with master 10 (S86).

After that, when master 10 is deactivated (S87), master 10 stops transmitting the hello packet that includes the identifier (NETID = M1).

Second controller 22 of slave 20a cancels the authentication when second controller 22 of slave 20a detects that at least predetermined period T has elapsed after second communicator 21 of slave 20a has received the last hello packet that includes the identifier (NETID = M1) (S88).

At this time, first controller 12 of master 10a causes first communicator 11 of master 10a to broadcast a hello packet that includes an identifier of master 10a (NETID = M2) (S89). Second communicator 21 of slave 20a receives the hello packet that includes the identifier (NETID = M2) (S90), and second controller 22 of slave 20a stores the time at which the hello packet is received into second storage 23 of slave 20a.

Next, second controller 22 of slave 20a performs authentication processing with master 10a (S91). Second controller 22 of slave 20a further generates a hello packet that includes the identifier (NETID = M2), and causes second communicator 21 of slave 20a to broadcast the generated hello packet (S92).

Here, in the example shown in FIG. 9, second communicator 21 of slave 20b receives the hello packet that includes the identifier (NETID = M2) before predetermined period T has elapsed after second communicator 21 has received the last hello packet that includes the identifier (NETID = M1). However, the hello packet is not a hello packet that includes the identifier of master 10 (NETID = M1).

Thus, second controller 22 of slave 20b thereafter detects that at least predetermined period T has elapsed after second communicator 21 of slave 20b has received the last hello packet that includes the identifier (NETID = M1). Then, second controller 22 of slave 20b cancels the authentication (S94), and performs authentication processing with master 10a via slave 20a as a relay station, based on the identifier (NETID = M2) that is included in the hello packet received in step S93, to acquire, from master 10a an encryption key that is used for communicating with master 10a (S95).

As described above, when a plurality of slaves are included in multihop communication system 100, second controller 22 of slave 20a further performs first authentication processing to acquire an encryption key from master 10. If second communicator 21 of slave 20a does not receive a hello packet that includes the identifier of master 10 for at least predetermined period T after the first authentication processing, second controller 22 of slave 20a performs second authentication processing with other master 10a to acquire, from other master 10a, an encryption key that is used for communicating with other master 10a. Slave 20b is to perform the same operation also.

Thus, slaves 20a and 20b can restore communication by joining a network of other master 10a even after master 10 is deactivated by detecting a hello packet not being received for at least predetermined period T.

### [Conclusion]

As described above, a communication device that operates as master 10 and is included in multihop communication system 100 including: first communicator 11 that transmits a hello packet to at least one slave 20a included in multihop communication system 100; and first controller 12 that causes first communicator 11 to transmit activation count information that indicates a cumulative activation count of the communication device, the activation count information being included in the hello packet.

In this manner, slave 20a can acquire the cumulative activation count of master 10 by receiving the hello packet that is generally used for the purposes of confirming the existence of the communication device and notifying route information on a route to the communication device. Thus, slave 20a can be readily informed of the operating state of master 10.

The communication device may further include: first storage 13 that stores an encryption key that is used for communicating with slave 20a, and first controller 12 may change the encryption key stored in first storage 13 each time the communication device is activated.

In this manner, slave 20a can determine whether the encryption key has been changed by receiving a hello packet that is generally used for the purpose of notifying route information on a route to the communication device, for instance.

First communicator 11 may transmit the encryption key to slave 20a, and first controller 12 may store, into first storage 13, authentication information of slave 20a to which the encryption key has been transmitted, and delete the authentication information stored in first storage 13 when the communication device is activated.

Thus, the safety can be improved by deleting old authentication information.

A communication device that operates as slave 20a and is included in multihop communication system 100 including: second communicator 21 that receives a hello packet that includes activation count information indicating a cumulative activation count of master 10 included in multihop communication system 100; second storage 23; and second controller 22 that stores the activation count information included in the received hello packet into second storage 23, and performs information processing using the activation count information stored.

In this manner, slave 20a can acquire the cumulative activation count of master 10 by receiving the hello packet that is generally used for the purpose of notifying route information on a route to the communication device, for instance. Thus, slave 20a can be readily informed of the operating state of master 10. Second controller 22 can perform information processing using activation count information, such as, for example, authentication processing and selecting of a relay station.

Master 10 may change an encryption key each time master 10 is activated, the encryption key being used for communicating with the communication device, and second storage 23 may further store the encryption key received by second communicator 21 from master 10. When second communicator 21 receives a hello packet, second controller 22 may further determine whether first activation count information included in the received hello packet matches second activation count information stored in second storage 23. Second controller 22 may communicate with master 10 using the encryption key stored in second storage 23 when second controller 22 determines that the first activation count information matches the second activation count information.

In this manner, slave 20a can continue the communication with master 10 using the encryption key stored in second storage 23 when master 10 is not reactivated.

Second controller 22 may perform authentication processing to acquire an encryption key, from master 10, when second controller 22 determines that the first activation count information is different from the second activation count information, the encryption key being used for communicating with master 10.

In this manner, slave 20a can acquire a changed encryption key when master 10 is reactivated.

Multihop communication system 100 may further include another master different from master 10. Second controller 22 may further perform first authentication processing to acquire an encryption key from master 10, and when second communicator 21 receives a hello packet after the first authentication processing, second controller 22 may further determine whether first activation count information included in the received hello packet matches second activation count information stored in second storage 23. Then, second controller 22 may perform second authentication processing to acquire an encryption key, from the other master, when second controller 22 determines that the first activation count information is different from the second activation count information, the encryption key being used for communicating with the other master.

In this manner, slave 20a can join, based on the activation count information, a network of the other master where a communication state is estimated to be better instead of the network of master 10 where a communication state is estimated to be poor due to reactivation.

Second controller 22 may further generate a hello packet that includes the activation count information included in the received hello packet, and causes second communicator 21 to transmit the generated hello packet.

In this manner, slave 20b that cannot directly communicate with master 10 can also acquire the cumulative activation count of master 10 by receiving the hello packet. Thus, slave 20b can be readily informed of the operating state of master 10.

Second communicator 21 of slave 20b may receive hello packets each of which includes activation count information of master 10 from other slaves that are included in multihop communication system 100 and are different from slave 20b. Second controller 22 of slave 20b may further compare, for each of the hello packets received, first activation count information included in the hello packet and second activation count information stored in second storage 23 of slave 20b. When second controller 22 of slave 20b determines that the first activation count information indicates a cumulative activation count lower than a cumulative activation count indicated by the second activation count information, in selecting a slave as a relay station for transmitting data to master 10 from among the other slaves, second controller 22 of slave 20b may exclude a slave that transmitted the hello packet that includes the first activation count information as a candidate for the relay station.

Slave 20c that has not received updated activation count information may not be successfully communicating with master 10. If slave 20b attempts to connect with master 10 via a slave like 20c, data may not reach master 10, but the above-mentioned configuration can prevent a failure of data not reaching master 10.

Second communicator 21 of slave 20b may receive hello packets each of which includes activation count information of master 10 from other slaves that are included in multihop communication system 100 and are different from slave 20b. Second controller 22 of slave 20b may further compare the activation count information included in each of the received hello packets. Second controller 22 of slave 20b may select, based on a result of comparing the activation count information, a slave that transmitted activation count information indicating a highest cumulative activation count as a relay station for transmitting data to master 10.

In this manner, a failure that data does not reach master 10 can be prevented.

Multihop communication system 100 further includes another master 10a, different from master 10, and second controller 22 of slave 20a may further perform first authentication processing to acquire an encryption key from master 10. Then, second controller 22 of slave 20a may perform second authentication processing to acquire an encryption key, from other master 10a, when second communicator 21 of slave 20a does not receive a hello packet that includes an identifier of master 10 for at least predetermined period T after the first authentication processing, the encryption key being used for communicating with other master 10a.

Thus, slave 20a can join a network of other master 10a to restore communication even after master 10 is deactivated, by detecting that a hello packet has not been received for at least predetermined period T.

Multihop communication system 100 includes master 10 and slave 20a. Master 10 including: first communicator 11 that transmits a hello packet to slave 20a; and first controller 12 that causes first communicator 11 to transmit activation count information that indicates a cumulative activation count of master 10, the activation count information being included in a hello packet. Slave 20a including: second communicator 21 that receives the hello packet that includes the activation count information; second storage 23; and second controller 22 that stores the activation count information included in the received hello packet into second storage 23.

In this manner, slave 20a can acquire the cumulative activation count of master 10 by receiving the hello packet. Thus, slave 20a can be readily informed of the operating state of master 10.

A communication method is performed by multihop communication system 100 that includes master 10 and slave 20a. Master 10 transmits activation count information that indicates a cumulative activation count of master 10, the activation count information being included in a hello packet. Slave 20a receives the hello packet that includes the activation count information, and stores the activation count information included in the received hello packet into second storage 23 included in slave 20a.

In this manner, slave 20a can acquire the cumulative activation count of master 10 by receiving the hello packet. Thus, slave 20a can be readily informed of the operating state of master 10.

### OTHER EMBODIMENTS

The above has described the multihop communication system according to the embodiments, yet the present invention is not limited to the above embodiments.

Specific aspects of the communication devices that operate as masters and the communication devices that operate as slaves which are described in the above embodiments are not particularly limited. For example, air-conditioning equipment, smart meters, and lighting apparatuses may be used as the communication devices. In addition, the masters and the slaves do not need to be the same kind of communication terminals, thus when the slaves are smart meters, the masters may be concentrators (servers) that manage data acquired from the slaves.

Note that, in the above embodiments, each of the elements may be configured of a dedicated hardware or realized by running a software program suitable for the element. The elements may each be realized by a program executor such as a central processing unit (CPU) or a processor reading and running a software program stored in a recording medium, such as a hard disk or a semiconductor memory.

The elements may be circuits. The circuits may be configured as one circuit as a whole or each as a separate circuit. The circuits may be general-purpose circuits or dedicated circuits.

In the above embodiments, processing that is performed by a specific processor may be performed by another processor. In addition, the order of processes may be changed, and the processes may be performed in parallel.

Note that, a general or a specific aspect of the present invention may be realized by a system, a method, an integrated circuit, a computer program, or a computer readable recording medium such as a CD-ROM, and also by an arbitrary combination of systems, methods, integrated circuits, computer programs, and recording media. For example, the present invention may be realized as a multihop communication system or as a communication method run by a master or a slave that is included in the multihop communication system, and may also be realized as a program that causes a computer to perform the communication method.

The foregoing has described the multihop communication system and the communication devices and methods that are used in the multihop communication system according to one or more aspects based on the embodiments, yet the present invention is not limited to such embodiments. Without departing from the scope of the present invention, various modifications which may be conceived by a person skilled in the art, and embodiments achieved by combining elements in different embodiments may be encompassed within the range of the one or more aspects.

### REFERENCE MARKS IN THE DRAWINGS

- 10, 10a: master
- 11: first communicator (communicator)
- 12: first controller (controller)
- 13: first storage (storage)
- 20a, 20b, 20c: slave
- 21: second communicator (communicator)
- 22: second controller (controller)
- 23: second storage (storage)
- 100: multihop communication system

## Claims

1. A communication device that is configured to operate as a master (10) and is to be included in a multihop communication system (100), the communication device comprising:
a communicator (11) that is configured to transmit a hello packet to at least one slave (20a-c) included in the multihop communication system (100); and
a controller (12) that is configured to cause the communicator (11) to transmit activation count information that indicates a cumulative activation count of the communication device, the activation count information being included in the hello packet, wherein the hello packet is a packet for notifying the at least one slave (20a-c) that the communication device is communicable;
**characterized in that**
the activation count information indicates a cumulative value of a number of times the communication device in a state of deactivation has reactivated; and
**in that** the communication device further comprises
a storage (13) that is configured to store an encryption key that is used for communicating with the at least one slave (20a-c), wherein
the controller (12) is configured to change the encryption key stored in the storage (13) when the communication device is activated.

2. The communication device according to claim 1, wherein
the communicator (11) is configured to transmit the encryption key to the at least one slave (20a-c), and
the controller (12) is configured to store, into the storage (13), authentication information of the at least one slave (20a-c) to which the encryption key has been transmitted, and
to delete the authentication information stored in the storage (13) when the communication device is activated.

3. A communication device that is configured to operate as a slave (20a-c) and is to be included in a multihop communication system (100), the communication device comprising:
a communicator (11) that is configured to receive a hello packet that includes activation count information indicating a cumulative activation count of a master (10) included in the multihop communication system (100), wherein the hello packet is a packet for notifying the slave (20a-c) that the master (10) is communicable;
a storage (23); and
a controller (22) that is configured to store the activation count information included in the received hello packet into the storage (23), and to perform information processing using the activation count information stored,
**characterized in that**
the activation count information indicates a cumulative value of a number of times the master (10) in a state of deactivation has reactivated; and
**in that** the storage is further configured to store an encryption key received by the communicator from the master (10),
when the communicator receives a hello packet, the controller (22) is further configured to determine whether first activation count information included in the received hello packet matches second activation count information stored in the storage (23), and
the controller (22) is further configured to communicate with the master (10) using the encryption key stored in the storage (23) when the controller (22) determines that the first activation count information matches the second activation count information.

4. The communication device according to claim 3, wherein
the controller (22) is configured to perform authentication processing to acquire an encryption key, from the master (10), when the controller (22) determines that the first activation count information is different from the second activation count information, the encryption key being usable for communicating with the master (10).

5. The communication device according to claim 3, wherein
the multihop communication system (100) further includes another master different from the master (10),
the controller (22) is further configured to perform first authentication processing to acquire an encryption key from the master (10),
when the communicator (21) receives a hello packet after the first authentication processing, the controller (22) is further configured to determine whether first activation count information included in the received hello packet matches second activation count information stored in the storage (23), and
the controller (22) is further configured to performs second authentication processing to acquire an encryption key, from the other master (10), when the controller (22) determines that the first activation count information is different from the second activation count information, the encryption key being usable for communicating with the other master.

6. The communication device according to claim 3, wherein
the controller (22) is further configured to generate a hello packet that includes the activation count information included in the received hello packet, and to cause the communicator (21) to transmit the generated hello packet.

7. The communication device according to claim 3, wherein
the communicator (21) receives hello packets each of which includes activation count information of the master (10) from other slaves (20a-c) that are included in the multihop communication system (100) and are different from the communication device, and
the controller (22) is further configured to compare, for each of the hello packets received, first activation count information included in the hello packet and second activation count information stored in the storage, and
when the controller (22) determines that the first activation count information indicates a cumulative activation count lower than a cumulative activation count indicated by the second activation count information, in selecting a slave as a relay station for transmitting data to the master (10) from among the other slaves (20a-c), the controller (22) is further configured to exclude a slave that transmitted the hello packet that includes the first activation count information as a candidate for the relay station.

8. The communication device according to claim 3, wherein
the communicator is configured to receive hello packets each of which includes activation count information of the master (10) from other slaves (20a-c) that are included in the multihop communication system (100) and are different from the communication device, and
the controller (22) is further configured to compare the activation count information included in each of the received hello packets, and
to select, based on a result of comparing the activation count information, a slave that transmitted activation count information indicating a highest cumulative activation count as a relay station for transmitting data to the master.

9. The communication device according to claim 3, wherein
the multihop communication system (100) further includes another master different from the master, and
the controller (22) is further configured to perform first authentication processing to acquire an encryption key from the master, and
to perform second authentication processing to acquire an encryption key, from the other master, when the communicator does not receive a hello packet that includes an identifier of the master for at least a predetermined period after the first authentication processing, the encryption key being usable for communicating with the other master.

10. A multihop communication system, comprising:
the communication device according to any one of claims 1 to 2 configured to operate as the master (10); and
the communication device according to any one of claims 3 to 9 configured to operate as the at least one slave (20a-c).

11. A communication method performed by a multihop communication system (100) that includes a master (10) and a slave (20a-c), the communication method comprising:
transmitting, by the master (10), activation count information that indicates a cumulative activation count of the master (10), the activation count information being included in a hello packet;
receiving, by the slave (20a-c), the hello packet that includes the activation count information, wherein the hello packet is a packet for notifying the slave (20a-c) that the master (10) is communicable; and
storing, by the slave (20a-c), the activation count information included in the received hello packet into a storage included in the slave (20a-c), wherein the activation count information indicates a cumulative value of a number of times the master (10) in a state of deactivation has reactivated.
storing, by the master (10) an encryption key that is used for communicating with the slave (20a-c), wherein the master (10) is configured to change the encryption key stored in the storage (13) when the master (10) activated;
storing, by the slave (20a-c), the encryption key received from the master (10);
determining, by the slave (20a-c), whether first activation count information included in the received hello packet matches stored second activation count information; and
communicating, by the slave (20a-c), with the master (10) using the encryption key when determined that the first activation count information matches the second activation count information.

12. A program for causing a computer to perform the communication method according to claim 11.

## Patentansprüche

1. Kommunikationsvorrichtung, die konfiguriert ist, um als Master (10) zu arbeiten und in ein Multihop-Kommunikationssystem (100) aufgenommen zu werden, wobei die Kommunikationsvorrichtung aufweist:
einen Kommunikator (11), der konfiguriert ist, um ein Begrüßungspaket an mindestens einen Slave (20a-c) zu übertragen, der in dem Multihop-Kommunikationssystem (100) enthalten ist; und
eine Steuereinheit (12), die konfiguriert ist, um den Kommunikator (11) zu veranlassen, Aktivierungsanzahlinformationen zu übertragen, die eine kumulative Aktivierungsanzahl der Kommunikationsvorrichtung angeben, wobei die Aktivierungsanzahlinformationen in dem Begrüßungspaket enthalten sind, wobei das Begrüßungspaket ein Paket ist, das den mindestens einen Slave (20a-c) darüber informiert, dass die Kommunikationsvorrichtung kommunikationsfähig ist;
**dadurch gekennzeichnet, dass**
die Aktivierungsanzahlinformationen einen kumulativen Wert einer Anzahl von Malen angeben, die die Kommunikationsvorrichtung in einem Zustand der Deaktivierung sich reaktiviert hat; und
die Kommunikationsvorrichtung ferner aufweist:
einen Speicher (13), der konfiguriert ist, um einen Verschlüsselungsschlüssel zu speichern, der zur Kommunikation mit dem mindestens einen Slave (20a-c) verwendet wird, wobei
die Steuereinheit (12) konfiguriert ist, um den Verschlüsselungsschlüssel, der in dem Speicher (13) gespeichert ist, zu ändern, wenn die Kommunikationsvorrichtung aktiviert wird.

2. Kommunikationsvorrichtung nach Anspruch 1, wobei
der Kommunikator (11) konfiguriert ist, um den Verschlüsselungsschlüssel an den mindestens einen Slave (20a-c) zu übertragen, und
die Steuereinheit (12) konfiguriert ist, um in dem Speicher (13) Authentifizierungsinformationen des mindestens einen Slave (20a-c), an den der Verschlüsselungsschlüssel übertragen wurde, zu speichern und
die Authentifizierungsinformationen, die in dem Speicher (13) gespeichert sind, zu löschen, wenn die Kommunikationsvorrichtung aktiviert wird.

3. Kommunikationsvorrichtung, die konfiguriert ist, um als Slave (20a-c) zu arbeiten und in ein Multihop-Kommunikationssystem (100) aufgenommen zu werden, wobei die Kommunikationsvorrichtung aufweist:
einen Kommunikator (11), der konfiguriert ist, um ein Begrüßungspaket zu empfangen, das Aktivierungsanzahlinformationen enthält, die eine kumulative Aktivierungsanzahl eines Masters (10), der in dem Multihop-Kommunikationssystem (100) enthalten ist, angeben, wobei das Begrüßungspaket ein Paket ist, das den Slave (20a-c) darüber informiert, dass der Master (10) kommunikationsfähig ist;
einen Speicher (23); und
eine Steuereinheit (22), die konfiguriert ist, um die in dem empfangenen Begrüßungspaket enthaltene Aktivierungsanzahlinformationen in dem Speicher (23) zu speichern und eine Informationsverarbeitung unter Verwendung der gespeicherten Aktivierungsanzahlinformationen durchzuführen,
**dadurch gekennzeichnet, dass**
die Aktivierungsanzahlinformationen einen kumulativen Wert einer Anzahl von Malen angeben, die der Master (10) in einem Zustand der Deaktivierung reaktiviert hat; und
der Speicher ferner konfiguriert ist, um einen Verschlüsselungsschlüssel zu speichern, der von dem Kommunikator von dem Master (10) her empfangen wird,
wenn der Kommunikator ein Begrüßungspaket empfängt, die Steuereinheit (22) ferner konfiguriert ist, um festzustellen, ob erste Aktivierungsanzahlinformationen, die in dem empfangenen Begrüßungspaket enthalten sind, mit den Aktivierungsanzahlinformationen übereinstimmen, die in dem zweiten Speicher (23) gespeichert sind, und
die Steuereinheit (22) ferner konfiguriert ist, um mit dem Master (10) unter Verwendung des Verschlüsselungsschlüssels, der in dem Speicher (23) gespeichert ist, zu kommunizieren, wenn die Steuereinheit (22) feststellt, dass die ersten Aktivierungsanzahlinformationen mit den zweiten Aktivierungsanzahlinformationen übereinstimmen.

4. Kommunikationsvorrichtung nach Anspruch 3, wobei
die Steuereinheit (22) konfiguriert ist, um eine Authentifizierungsverarbeitung durchzuführen, um einen Verschlüsselungsschlüssel von dem Master (10) zu erlangen, wenn die Steuereinheit (22) feststellt, dass die ersten Aktivierungsanzahlinformationen sich von den zweiten Aktivierungsanzahlinformationen unterscheiden, wobei der Verschlüsselungsschlüssel zur Kommunikation mit dem Master (10) verwendbar ist.

5. Kommunikationsvorrichtung nach Anspruch 3, wobei
das Multihop-Kommunikationssystem (100) ferner einen weiteren Master enthält, der sich von dem Master (10) unterscheidet,
die Steuereinheit (22) ferner konfiguriert ist, um eine erste Authentifizierungsverarbeitung durchzuführen, um einen Verschlüsselungsschlüssel von dem Master (10) zu erlangen,
wenn der Kommunikator (21) nach der ersten Authentifizierungsverarbeitung ein Begrüßungspaket empfängt, die Steuereinheit (22) ferner konfiguriert ist, um festzustellen, ob die ersten Aktivierungsanzahlinformationen, die in dem empfangenen Begrüßungspaket enthaltenen sind, mit den zweiten Aktivierungsanzahlinformationen, die in dem Speicher (23) gespeichert sind, übereinstimmen, und
die Steuereinheit (22) ferner konfiguriert ist, um eine zweite Authentifizierungsverarbeitung durchzuführen, um einen Verschlüsselungsschlüssel von dem weiteren Master (10) zu erlangen, wenn die Steuereinheit (22) feststellt, dass sich die ersten Aktivierungsanzahlinformationen von den zweiten Aktivierungsanzahlinformationen unterscheiden, wobei der Verschlüsselungsschlüssel zur Kommunikation mit dem anderen Master verwendbar ist.

6. Kommunikationsvorrichtung nach Anspruch 3, wobei
die Steuereinheit (22) ferner konfiguriert ist, um ein Begrüßungspaket zu erzeugen, das die Aktivierungsanzahlinformationen, die in dem empfangenen Begrüßungspaket enthalten sind, enthält, und den Kommunikator (21) zu veranlassen, das erzeugte Begrüßungspaket zu übertragen.

7. Kommunikationsvorrichtung nach Anspruch 3, wobei
der Kommunikator (21) Begrüßungspakete, die jeweils Aktivierungsanzahlinformationen des Masters (10) enthalten, von weiteren Slaves (20a-c) empfängt, die in dem Multihop-Kommunikationssystem (100) enthalten sind und sich von der Kommunikationsvorrichtung unterscheiden, und
die Steuereinheit (22) ferner konfiguriert ist, um für jedes der empfangenen Begrüßungspakete erste Aktivierungsanzahlinformationen, die in dem Begrüßungspaket enthalten sind, mit zweiten Aktivierungsanzahlinformationen, die in dem Speicher gespeichert sind, zu vergleichen, und
wenn die Steuereinheit (22) feststellt, dass die erste Aktivierungsanzahlinformationen eine kumulative Aktivierungsanzahl angeben, die niedriger ist als eine kumulative Aktivierungsanzahl, die durch die zweiten Aktivierungsanzahlinformationen angegeben wird, bei der Auswahl eines Slaves aus den anderen Slaves (20a-c) als eine Relaisstation zum Übertragen von Daten an den Master (10) die Steuereinheit (22) ferner konfiguriert ist, um einen Slave, der das Begrüßungspaket übertragen hat, das die ersten Aktivierungsanzahlinformationen enthält, als einen Kandidaten für die Relaisstation auszuschließen.

8. Kommunikationsvorrichtung nach Anspruch 3, wobei
der Kommunikator konfiguriert ist, um Begrüßungspakete, die jeweils Aktivierungsanzahlinformationen des Masters (10) enthalten, von weiteren Slaves (20a-c) zu empfangen, die in dem Multihop-Kommunikationssystem (100) enthalten sind und sich von der Kommunikationsvorrichtung unterscheiden, und
die Steuereinheit (22) ferner konfiguriert ist, um die Aktivierungsanzahlinformationen, die jeweils in den empfangenen Begrüßungspaketen enthalten sind, zu vergleichen und
auf der Grundlage eines Ergebnisses des Vergleichs der Aktivierungsanzahlinformationen einen Slave, der Aktivierungsanzahlinformationen übertragen hat, die eine höchste kumulative Aktivierungsanzahl angeben, als Relaisstation zum Übertragen von Daten an den Master auszuwählen.

9. Kommunikationsvorrichtung nach Anspruch 3, wobei das Multihop-Kommunikationssystem (100) ferner einen weiteren Master enthält, der sich von dem Master unterscheidet, und
die Steuereinheit (22) ferner konfiguriert ist, um eine erste Authentifizierungsverarbeitung durchzuführen, um einen Verschlüsselungsschlüssel von dem Master zu erlangen, und
eine zweite Authentifizierungsverarbeitung durchzuführen, um einen Verschlüsselungsschlüssel von dem weiteren Master zu erlangen, wenn der Kommunikator ein Begrüßungspaket, das eine Kennung des Masters enthält, für mindestens eine vorbestimmte Zeitspanne nach der ersten Authentifizierungsverarbeitung nicht empfängt, wobei der Verschlüsselungsschlüssel zur Kommunikation mit dem anderen Master verwendbar ist.

10. Multihop-Kommunikationssystem, aufweisend:
die Kommunikationsvorrichtung nach einem der Ansprüche 1 bis 2, die konfiguriert ist, um als Master (10) zu arbeiten; und
die Kommunikationsvorrichtung nach einem der Ansprüche 3 bis 9, die konfiguriert ist, um als der mindestens eine Slave (20a-c) zu arbeiten.

11. Kommunikationsverfahren, das von einem Multihop-Kommunikationssystem (100) durchgeführt wird, das einen Master (10) und einen Slave (20a-c) enthält, wobei das Kommunikationsverfahren umfasst:
Übertragen von Aktivierungsanzahlinformationen, die eine kumulative Aktivierungsanzahl des Masters (10) angeben, durch den Master (10), wobei die Aktivierungsanzahlinformationen in einem Begrüßungspaket enthalten sind;
Empfangen des Begrüßungspakets, das die Aktivierungsanzahlinformationen enthält, durch den Slave (20a-c), wobei das Begrüßungspaket ein Paket ist, das den Slave (20a-c) darüber informiert, dass der Master (10) kommunikationsfähig ist; und
Speichern der Aktivierungsanzahlinformationen, die in dem empfangenen Begrüßungspaket enthalten sind, durch den Slave (20a-c) in einem Speicher, der in dem Slave (20a-c) enthalten ist, wobei die Aktivierungsanzahlinformationen einen kumulativen Wert einer Anzahl von Malen angeben, die der Master (10) in einem Zustand der Deaktivierung reaktiviert hat.
Speichern eines Verschlüsselungsschlüssels, der zur Kommunikation mit dem Slave (20a-c) verwendet wird, durch den Master (10), wobei der Master (10) konfiguriert ist, um den Verschlüsselungsschlüssel, der in dem Speicher (13) gespeichert ist, zu ändern, wenn der Master (10) aktiviert wird;
Speichern des Verschlüsselungsschlüssels, der von dem Master (10) her empfangen wurde, durch den Slave (20a-c);
Feststellen, durch den Slave (20a-c), ob erste Aktivierungsanzahlinformationen, die in dem empfangenen Begrüßungspaket enthalten sind, mit gespeicherten zweiten Aktivierungsanzahlinformationen übereinstimmen; und
Kommunizieren durch den Slave (20a-c) mit dem Master (10) unter Verwendung des Verschlüsselungsschlüssels, wenn festgestellt wird, dass die ersten Aktivierungsanzahlinformationen mit den zweiten Aktivierungsanzahlinformationen übereinstimmen.

12. Programm, um einen Computer zu veranlassen, das Kommunikationsverfahren nach Anspruch 11 durchzuführen.

## Revendications

1. Dispositif de communication qui est configuré de manière à opérer en qualité de maître (10) et qui doit être inclus dans un système de communication à sauts multiples (100), le dispositif de communication comprenant :
un appareil de communication (11) qui est configuré de manière à transmettre un paquet « Hello » à au moins un esclave (20a-c) inclus dans le système de communication à sauts multiples (100) ; et
un contrôleur (12) qui est configuré de manière à amener l'appareil de communication (11) à transmettre des informations de comptage d'activation qui indiquent un comptage d'activation cumulatif du dispositif de communication, les informations de comptage d'activation étant incluses dans le paquet « Hello », dans lequel le paquet « Hello » est un paquet destiné à notifier, audit au moins un esclave (20a-c), que le dispositif de communication est en mesure de communiquer ;
**caractérisé en ce que** :
les informations de comptage d'activation indiquent une valeur cumulative d'un nombre de fois où le dispositif de communication dans un état de désactivation a été réactivé ; et
**en ce que** le dispositif de communication comprend en outre
un magasin de stockage (13) qui est configuré de manière à stocker une clé de chiffrement qui est utilisée pour communiquer avec ledit au moins un esclave (20a-c), dans lequel
le contrôleur (12) est configuré de manière à changer la clé de chiffrement stockée dans le magasin de stockage (13) lorsque le dispositif de communication est activé.

2. Dispositif de communication selon la revendication 1, dans lequel :
l'appareil de communication (11) est configuré de manière à transmettre la clé de chiffrement audit au moins un esclave (20a-c) ; et
le contrôleur (12) est configuré de manière à stocker, dans le magasin de stockage (13), des informations d'authentification dudit au moins un esclave (20a-c) auquel la clé de chiffrement a été transmise ; et
à supprimer les informations d'authentification stockées dans le magasin de stockage (13) lorsque le dispositif de communication est activé.

3. Dispositif de communication qui est configuré de manière à opérer en qualité d'esclave (20a-c) et qui doit être inclus dans un système de communication à sauts multiples (100), le dispositif de communication comprenant :
un appareil de communication (11) qui est configuré de manière à recevoir un paquet « Hello » qui inclut des informations de comptage d'activation indiquant un comptage d'activation cumulatif d'un maître (10) inclus dans le système de communication à sauts multiples (100), dans lequel le paquet « Hello » est un paquet destiné à notifier à l'esclave (20a-c) que le maître (10) est en mesure de communiquer ;
un magasin de stockage (23) ; et
un contrôleur (22) qui est configuré de manière à stocker les informations de comptage d'activation incluses dans le paquet « Hello » reçu dans le magasin de stockage (23), et à mettre en œuvre un traitement d'informations en utilisant les informations de comptage d'activation stockées ;
**caractérisé en ce que** :
les informations de comptage d'activation indiquent une valeur cumulative d'un nombre de fois où le maître (10) dans un état de désactivation a été réactivé ; et
**en ce que** le magasin de stockage est en outre configuré de manière à stocker une clé de chiffrement reçue par l'appareil de communication en provenance du maître (10) ;
lorsque l'appareil de communication reçoit un paquet « Hello », le contrôleur (22) est en outre configuré de manière à déterminer si des premières informations de comptage d'activation incluses dans le paquet « Hello » reçu correspondent à des secondes informations de comptage d'activation stockées dans le magasin de stockage (23) ; et
le contrôleur (22) est en outre configuré de manière à communiquer avec le maître (10) en utilisant la clé de chiffrement stockée dans le magasin de stockage (23) lorsque le contrôleur (22) détermine que les premières informations de comptage d'activation correspondent aux secondes informations de comptage d'activation.

4. Dispositif de communication selon la revendication 3, dans lequel :
le contrôleur (22) est configuré de manière à mettre en œuvre un traitement d'authentification pour acquérir une clé de chiffrement, auprès du maître (10), lorsque le contrôleur (22) détermine que les premières informations de comptage d'activation sont différentes des secondes informations de comptage d'activation, la clé de chiffrement étant utilisable pour communiquer avec le maître (10).

5. Dispositif de communication selon la revendication 3, dans lequel :
le système de communication à sauts multiples (100) inclut en outre un autre maître différent du maître (10) ;
le contrôleur (22) est en outre configuré de manière à mettre en œuvre un premier traitement d'authentification afin d'acquérir une clé de chiffrement auprès du maître (10) ;
lorsque l'appareil de communication (21) reçoit un paquet « Hello » après le premier traitement d'authentification, le contrôleur (22) est en outre configuré de manière à déterminer si les premières informations de comptage d'activation incluses dans le paquet « Hello » reçu correspondent aux secondes informations de comptage d'activation stockées dans le magasin de stockage (23) ; et
le contrôleur (22) est en outre configuré de manière à mettre en œuvre un second traitement d'authentification pour acquérir une clé de chiffrement, auprès de l'autre maître (10), lorsque le contrôleur (22) détermine que les premières informations de comptage d'activation sont différentes des secondes informations de comptage d'activation, la clé de chiffrement étant utilisable pour communiquer avec l'autre maître.

6. Dispositif de communication selon la revendication 3, dans lequel :
le contrôleur (22) est en outre configuré de manière à générer un paquet « Hello » qui inclut les informations de comptage d'activation incluses dans le paquet « Hello » reçu, et à amener l'appareil de communication (21) à transmettre le paquet « Hello » généré.

7. Dispositif de communication selon la revendication 3, dans lequel :
l'appareil de communication (21) reçoit des paquets « Hello » qui incluent chacun des informations de comptage d'activation du maître (10), en provenance d'autres esclaves (20a-c) qui sont inclus dans le système de communication à sauts multiples (100) et sont différents du dispositif de communication ; et
le contrôleur (22) est en outre configuré de manière à comparer, pour chacun des paquets « Hello » reçus, des premières informations de comptage d'activation incluses dans le paquet « Hello » et des secondes informations de comptage d'activation stockées dans le magasin de stockage ; et
lorsque le contrôleur (22) détermine que les premières informations de comptage d'activation indiquent un comptage d'activation cumulatif inférieur à un comptage d'activation cumulatif indiqué par les secondes informations de comptage d'activation, dans le cadre de la sélection d'un esclave, en tant qu'une station relais pour transmettre des données au maître (10), parmi les autres esclaves (20a-c), le contrôleur (22) est en outre configuré de manière à exclure un esclave qui a transmis le paquet « Hello » qui inclut les premières informations de comptage d'activation en tant que candidat pour la station relais.

8. Dispositif de communication selon la revendication 3, dans lequel :
l'appareil de communication est configuré de manière à recevoir des paquets « Hello » qui incluent chacun des informations de comptage d'activation du maître (10), en provenance d'autres esclaves (20a-c) qui sont inclus dans le système de communication à sauts multiples (100) et sont différents du dispositif de communication ; et
le contrôleur (22) est en outre configuré de manière à comparer les informations de comptage d'activation incluses dans chacun des paquets « Hello » reçus ; et
à sélectionner, sur la base d'un résultat de l'étape de comparaison des informations de comptage d'activation, un esclave qui a transmis des informations de comptage d'activation indiquant un comptage d'activation cumulatif le plus élevé, en tant que station relais pour transmettre des données au maître.

9. Dispositif de communication selon la revendication 3, dans lequel :
le système de communication à sauts multiples (100) inclut en outre un autre maître différent du maître ; et
le contrôleur (22) est en outre configuré de manière à mettre en œuvre un premier traitement d'authentification afin d'acquérir une clé de chiffrement auprès du maître ; et
à mettre en œuvre un second traitement d'authentification afin d'acquérir une clé de chiffrement, auprès de l'autre maître, lorsque l'appareil de communication ne reçoit pas un paquet « Hello » qui inclut un identifiant du maître pendant au moins une période prédéterminée après le premier traitement d'authentification, la clé de chiffrement étant utilisable pour communiquer avec l'autre maître.

10. Système de communication à sauts multiples, comprenant :
le dispositif de communication selon l'une quelconque des revendications 1 à 2, configuré de manière à opérer en tant que le maître (10) ; et
le dispositif de communication selon l'une quelconque des revendications 3 à 9, configuré de manière à opérer en tant que ledit au moins un esclave (20a-c).

11. Procédé de communication mis en œuvre par un système de communication à sauts multiples (100) qui inclut un maître (10) et un esclave (20a-c), le procédé de communication comprenant les étapes ci-dessous consistant à :
transmettre, par le biais du maître (10), des informations de comptage d'activation qui indiquent un comptage d'activation cumulatif du maître (10), les informations de comptage d'activation étant incluses dans un paquet « Hello » ;
recevoir, par le biais de l'esclave (20a-c), le paquet « Hello » qui inclut les informations de comptage d'activation, dans lequel le paquet « Hello » est un paquet destiné à notifier, à l'esclave (20a-c), que le maître (10) est en mesure de communiquer ; et
stocker, par le biais de l'esclave (20a-c), les informations de comptage d'activation incluses dans le paquet « Hello » reçu, dans un magasin de stockage inclus dans l'esclave (20a-c), dans lequel les informations de comptage d'activation indiquent une valeur cumulative d'un nombre de fois où le maître (10) dans un état de désactivation a été réactivé ;
stocker, par le biais du maître (10), une clé de chiffrement qui est utilisée pour communiquer avec l'esclave (20a-c), dans lequel le maître (10) est configuré de manière à changer la clé de chiffrement stockée dans le magasin de stockage (13) lorsque le maître (10) est activé ;
stocker, par le biais de l'esclave (20a-c), la clé de chiffrement reçue en provenance du maître (10) ;
déterminer, par le biais de l'esclave (20a-c), si des premières informations de comptage d'activation incluses dans le paquet « Hello » reçu correspondent à des secondes informations de comptage d'activation stockées ; et
communiquer, par le biais de l'esclave (20a-c), avec le maître (10), en utilisant la clé de chiffrement, lorsqu'il est déterminé que les premières informations de comptage d'activation correspondent aux secondes informations de comptage d'activation.

12. Programme pour amener un ordinateur à mettre en œuvre le procédé de communication selon la revendication 11.
